(19) Europäisches Patentamt
European Patent Office
Office européen des brevets

(11) **EP 2 761 188 B1**

(12) **EUROPEAN PATENT SPECIFICATION**

(45) Date of publication and mention of the grant of the patent:
**23.01.2019 Bulletin 2019/04**

(21) Application number: **12766445.6**

(22) Date of filing: **27.09.2012**

(51) Int Cl.:
*F04D 27/00* (2006.01)   *F01D 21/00* (2006.01)
*F01D 21/10* (2006.01)   *F01D 25/00* (2006.01)

(86) International application number:
**PCT/EP2012/069064**

(87) International publication number:
**WO 2013/045540 (04.04.2013 Gazette 2013/14)**

(54) **Systems and methods for determining the level of fouling of compressors**

Systeme und Verfahren zum Nachweis des Beschmutzungsgrades von Verdichtern

Systèmes et procédés pour déterminer le niveau d'encrassement de compresseurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 IT CO20110039**

(43) Date of publication of application:
**06.08.2014 Bulletin 2014/32**

(73) Proprietor: **Nuovo Pignone S.p.A.**
**50127 Florence (IT)**

(72) Inventors:
• **GRECO, Giorgio**
  **50127 Firenze (Florence) (IT)**
• **XIA, Hua**
  **Niskayuna, New York 12309 (US)**
• **PIERI, Alberto**
  **50127 Firenze (Florence) (IT)**
• **SANGIORGIO, Vincenzo**
  **03013 Ferentino (IT)**
• **LUCAS, Patrick**
  **77183 Croissy-Beaubourg (FR)**
• **DE BORTOLI, Lorenzo**
  **50127 Firenze (Florence) (IT)**

(74) Representative: **Illingworth-Law, William Illingworth**
**GPO Europe**
**GE International Inc.**
**The Ark**
**201 Talgarth Road**
**Hammersmith**
**London W6 8BJ (GB)**

(56) References cited:
WO-A1-94/03863          WO-A1-2012/007553
US-A- 4 825 380         US-A1- 2005 061 058
US-A1- 2008 027 616     US-A1- 2008 245 980
US-A1- 2009 087 303     US-A1- 2010 074 572

• TARABRIN A P ET AL: "An Analysis of Axial Compressor Fouling and Blade Cleaning Method", TRANSACTIONS OF THE ASME: JOURNAL OF TURBOMACHINERY, AMERICAN SOCIETY OF MECHANICAL ENGINEERS, US, vol. 120, no. 2, 1 April 1998 (1998-04-01) , pages 256-261, XP009159410, ISSN: 0889-504X
• JOHN M SCHULTZ: "The polytropic analysis of centrifugal compressors", JOURNAL OF ENGINEERING FOR POWER, NEW YORK, NY, 1 January 1962 (1962-01-01), pages 69-82, XP009159396, ISSN: 0022-0825 cited in the application

EP 2 761 188 B1

## Description

### TECHNICAL FIELD

The present invention relates generally to systems and methods for determining fouling in compressors and, more particularly, to determining a level of fouling of one or more compressor stages during operation.

### BACKGROUND

US 2008/027616 A1 discloses estimating the impact of compressor fouling in a combined cycle power block by determining the current performance of the combined cycle power block. US 4 825 380 A discloses a gas compressor monitoring system for controlling a compressor via a supervisory computer, wherein flow, pressure, temperature and speed are measured by sensing modules. The compressor may comprise a plurality of compressor stages. Any suitable sensing means like electrical, pneumatic, mechanical or hydraulic, or any combination thereof, can be used to acquire and transmit the measured signals. The sensing modules can be arranged at the inlet or outlet of each compressor stage. Moreover, the molecular weight of the gas, the normalized polytropic head and the corresponding normalized suction flow are calculated via data pre-stored in the computer.

It is well known that, for example, in an ethylene production unit, fouling is a phenomenon that may significantly limit the performance of the charge gas compressor and affect inter-stage coolers, and therefore the entire operation of the ethylene production unit. More generally, fouling may occur in any compressor application wherein a combination of pressure and temperature within the compressor may result in the deposition of materials on various surfaces within the compressor. Ethylene production plants are, therefore, discussed here as an illustrative example.

Cracked gas compressors used in ethylene production plants are very high-capacity centrifugal compressors with absorbed power in the range of 40 MW to 90 MW. They present many design, fabrication and operational peculiarities with challenges seldom matched in other applications. Today, process requirements are forcing new developments and approaches in the design and operation of this machine. Most of the developments are targeting the reduction -- if not the complete suppression -- of fouling phenomena. The choices that are made during the design phase of the cracked gas compressor, as well as operation practices, will later have a strong influence on the fouling rate of the compressor and, therefore, on overall plant operability.

Ethylene plant cracked gas compressor fouling is typically caused by the deposition of organic materials formed via polymerization reactions. The polymerization reactions are initiated by heat and catalyzed by peroxides and trace metal particles such as iron ions. Because of their inertia and weight, the polymeric chains, while flowing inside the process gas compressor, stick on the metallic internal surfaces, forming deposits that modify the aerodynamics of the channels, interfere with rotor parts, and create erosion problems due to a coke-like hard material formed by dehydrogenation phenomena of the polymerized organic material deposits. The polymerization rate is increased by the presence of oxygen and trace metals and mostly influenced by the temperature of the gas. Therefore, as the compression efficiency declines, the resulting increase in outlet temperature will lead to a further acceleration of the fouling rate.

The final results include the reduction of the polytropic efficiency, leading to reduced throughput and increased suction pressure, with subsequent higher-than-desired furnace pressure. This affects selectivity and the conditioning of the interval between turnarounds, leading to a dramatic increase in operating costs.

Accordingly, a need exists to be able to rapidly and accurately determine a level of fouling in a compressor which information can, for example, be used to provide condition-based antifouling maintenance for such compressors.

### SUMMARY

According to one aspect of the present invention, a method for determining a degree of fouling formation in a compressor, the method includes the steps of collecting data associated with operation of the compressor, estimating a polytropic efficiency of at least one stage of the compressor using the collected data, normalizing the estimated polytropic efficiency, and determining the degree of fouling formation in the compressor based on the normalized estimated polytropic efficiency.

According to another embodiment, a system for determining a degree of fouling formation in a compressor includes an interface configured to collect data associated with operation of the compressor; and a processor configured to estimate a polytropic efficiency of at least one stage of the compressor using the collected data, to normalize the estimated polytropic efficiency, and to determine the degree of fouling formation in the compressor based on the normalized estimated polytropic efficiency.

According to another embodiment, a charge gas compressor monitoring system for determining polytropic efficiency of a charge gas compressor train having a plurality of compressor stages fluidly connected in series and an inter-stage cooler positioned between adjacent compressor stages, said charge gas compressor monitoring system includes a plurality of optical sensing modules, wherein each of said sensing modules is positioned adjacent to an inlet or an outlet of each compressor stage, each sensing module comprising at least one fiber Bragg grating sensor positioned within a housing for measuring an operating parameter for a corresponding compressor stage, and each of said fiber Bragg grating sensors is functionalized to respond to temperature, pressure, gas density, flow rate, or dynamic event; and a controller operatively connected to said optical sensing modules, said controller including a processor to determine an estimated polytropic efficiency corresponding to each compressor stage and to output an indication of a normalized polytropic efficiency and the degree of fouling formation based on the normalized polytronic efficiency corresponding to each compressor stage.

## BRIEF DESCRIPTION OF SEVERAL VIEWS OF THE DRAWINGS

These and other features of the present invention, and their advantages, are illustrated specifically in embodiments of the invention now to be described, by way of example, with reference to the accompanying diagrammatic drawings, in which:

FIG. 1 is a flowchart depicting a method of determining a degree of fouling of a compressor according to an embodiment;

FIG. 2 is a schematic diagram of a system for determining a degree of fouling of a compressor according to an embodiment;

FIG. 3 is a schematic diagram of a charge gas compressor monitoring system according to an embodiment;

FIG. 4(a) is an embodiment of a sensor module;

FIG.4(b) is another example embodiment of a sensor module;

FIG. 4(c) depicts wavelengths associated with the embodiment of FIG. 4(b);

FIGS. 5(a) and 5(b) are graphs illustrating a relationship between k and molecular weight of a gas according to embodiments;

FIGS. 6(a) and 6(b) are graphs illustrating normalization of estimated polytropic efficiency according to embodiments; and

FIG. 7 is a schematic diagram of a portion of a monitoring system according to an embodiment.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

## DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

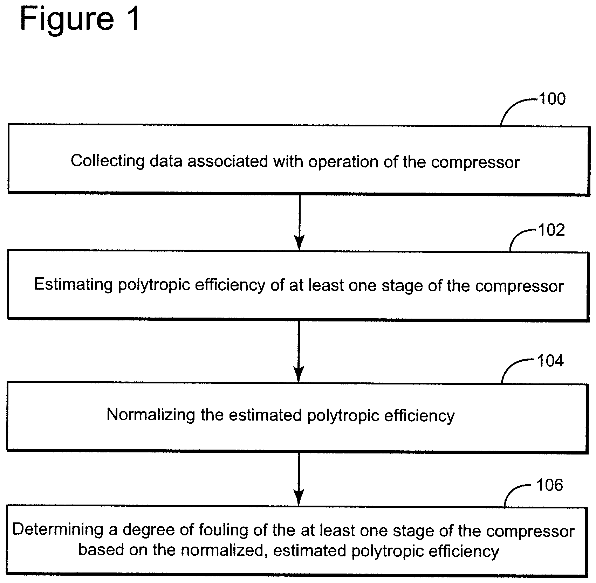

According to embodiments described herein, an integrated approach is provided to determine a level of fouling formation of a compressor, which information can, for example, be used to achieve fouling control based on the knowledge of the various aspects that influence the performance of a compressor. A general method for determining a level of fouling in one or more stages of a compressor according to an embodiment is illustrated in the flow chart of FIG. 1. Therein, various data associated with the operation of the compressor is gathered at step 100, e.g., data associated with parameters such as speed of operation, flow rate of the process gas, pressures, temperatures, and gas composition. At step 102, the gathered data is used to estimate one or more polytropic efficiency value(s) associated with the compressor. At step 104, the estimated polytropic efficiency value(s) are normalized to, e.g., exclude performance variation effects other than fouling. Then, at step 106, the normalized polytropic efficiency values are output or otherwise used to determine or indicate a degree of fouling of the associated compressor or stage(s) of a compressor. Each of the steps illustrated in FIG.1 will now be described in more detail according to various embodiments.

Data Collection (Step 100)

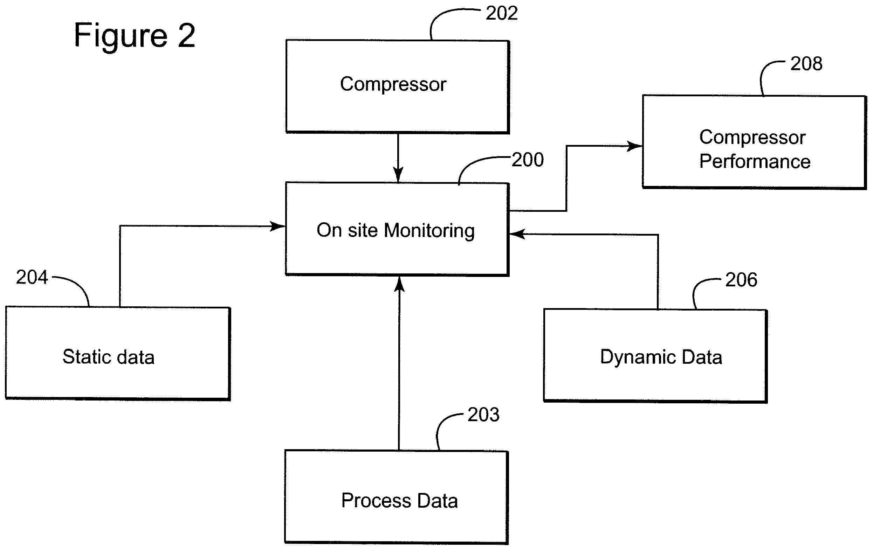

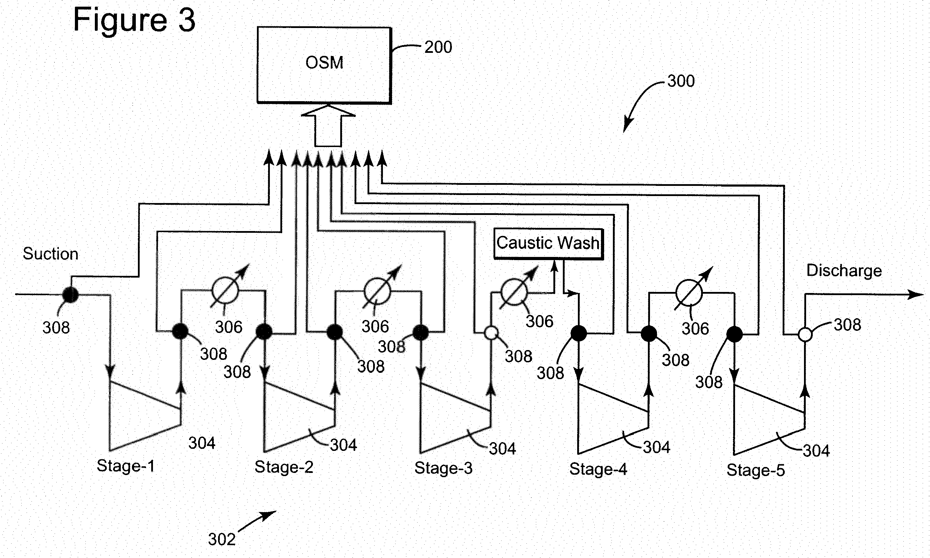

FIG. 2 illustrates a general embodiment in which data is collected by an on-site monitoring (OSM) system 200. Therein, the data collected by the OSM system 200 may include compressor data 202, e.g., collected manually and/or automatically from the compressor stage(s) (an example of which is given below with respect to FIG. 3), process data 203, static data 204 and dynamic data 206. The compressor data 202 can include, for example, data associated with compressor vibration and other machine mechanical factors which may be relevant to performance. The process data 203 collected by the OSM 200 from the compressor stage(s) can include, for example, data associated with the flow rate of the process gas, data associated with the gas composition (e.g., the process gas' molecular weight), data associated with the pressure of the process gas at various points within the compressor stage(s) and/or data associated with the temperature of the process gas at various stages within the compressor stage(s). The static data 204 can include data which does not change as a function of the operation of the compressor stage(s), for example, performance curves associated with the particular compressor stage(s) that were compiled, e.g., during testing of the compressor stage(s) prior to their being place into service, e.g., in an ethylene production plant or another application. The dynamic data 206 can include data other than the process data which can change as a function of the operation of the compressor stage(s) including, for example, data associated with the (train) speed of the compressor and/or valve status (open/closed).

As mentioned earlier, data which can be used to determine the degree of fouling of a compressor or one or more compressor stages can be collected manually, automatically, or by some combination of manual and automatic processes. Compressor polytropic efficiency, which is estimated in step 102 of the embodiment of FIG. 1, primarily depends upon cracked gas density, flow rate, suction/discharge temperatures and pressures, and fouling severity. Thus, temperature, pressure, and flow sensors can be positioned within the compressor to provide indications of their respective parameter values, which values can be manually identified and recorded for subsequent usage in estimating the polytropic efficiency. Moreover, if available, step 100 could also be performed (in part) by gathering data associated with the gas composition within the compressor using a gas chromatograph or similar device. Alternatively, one or more automatic data gathering systems and sensors can be used to measure (and collect data for) one or more of these parameters. An example of an automated system for gathering process data will now be described with respect to FIG.3.

Referring to FIG. 3, a schematic of an exemplary automated monitoring system 300 for monitoring and collecting data associated with the parameters which can be used to of the polytropic efficiency of a compressor, e.g., for use in an ethylene processing unit or another application, e.g., cracked gas or propylene production, is shown. Although a five-stage compressor system 302, having Stage-1 through Stage-5, is shown in FIG. 3 and described below, it should be understood by those skilled in the art that any number of stages can be used in conjunction with the concepts and systems described herein. Thus, in FIG. 3 the compressor 302 a compressor train having a plurality of compressor stages 304 that are fluidly connected in series. Compression of process gas entering on the left (suction) side and processed by each stage 304 causes the temperature of the process gas to increase, so an inter-stage cooler 306 is positioned between each compressor stage (1-2, 2-3,3-4,4-5) to maintain a substantially consistent gas temperature as the gas passes between stages such that the overall process is nearly adiabatic.

Because each of the stages 304 of the compressor 302 are subject to degradation of operating conditions, it may be important to provide real-time monitoring of the operating conditions of the compressor 302 at each stage. However, the present invention is not limited to monitoring (collecting process data from) each stage 304 of the compressor 302 and can, alternatively, monitor one or more of the stages. Nonetheless, according to this purely illustrative exemplary embodiment, the compressor monitoring system 300 is configured to monitor operating parameters relating to each stage of the compressor and gather data which can be used, as described below, to estimate polytropic efficiency for each stage.

A plurality of sensing modules 308 are positioned within or adjacent to the gas stream to measure operating conditions or parameters of the gas passing therealong. More specifically, but purely as an illustrative embodiment, the sensor modules 308 can be positioned along the compressor train to measure operating parameters at the inlet (suction) and outlet (discharge) of each compressor stage 304. Each of the sensing modules 308 according to this embodiment includes at least one fiber Bragg grating sensor, as will be explained below, however it will be appreciated that other types of sensors could alternatively be used as described above. Each of the sensing modules 308 is operatively connected to the OSM 200, e.g., via junction box or other intervening nodes, in which the signal from each sensing module 308 is received. The data acquired by the OSM 308 is then processed as described below to determine a level of fouling of each stage 304 of the compressor 302.

As mentioned above, this exemplary compressor monitoring system 300 includes a fiber Bragg grating-based (FBG-based) sensing module 300 that can be used for monitoring pre-determined operating parameters for a gas charge compressor train. Several sensing modules allow multiple (e.g., temperature, pressure, flow, gas composition, vibration, etc.) to be simultaneously detected from sensors which are installed at the input and output of each compressor stage of a compressor 302. Each sensor or sensing module is configured to measure at least one condition, including but not limited to: temperature, pressure, flow rate, gas density, as well as thermal and mechanical dynamic events. The sensing modules 308 are interconnected with the OSM 200 by, for example, either Ethernet, fiber optic cables, analog transmitter or wirelessly.

Various types of sensing modules 308 can be used to measure one or more operating conditions at each stage of a multi-stage compressor 302. In particular, fiber optic sensors, such as a fiber Bragg grating (FBG) sensor, are incorporated into a sensor module and deployed at each location in which pre-determined compressor parameters are to be measured. A FBG-based sensing module is packaged and functionalized to respond to a specific external parameters or several different types of external parameters For example, in one embodiment, the FBG-based sensing module is a multi-functional physical sensing module that can simultaneously measure temperature, pressure, and flow rate. This FBG-based sensing module is packaged in a bolt-like structure. In another embodiment, the FBG-based sensing module is configured for multi-functional chemical gas sensing that can simultaneously measure gas density, temperature, and flow rate. This sensing module consists of thermally functionalized FBG-based sensors that are sealed in a thermal capacitor-like package. The gas density is detected when the compressed gas is flowed through the thermal capacitor cell which is measured by FBG-based thermal sensors. The relative wavelength shift of each fiber optic sensor is correlated and converted to an equivalent gas molecular weight, which is related to the compressor polytropic efficiency. Each of these sensing modules can be operated in either a steady status mode or a dynamic status mode.

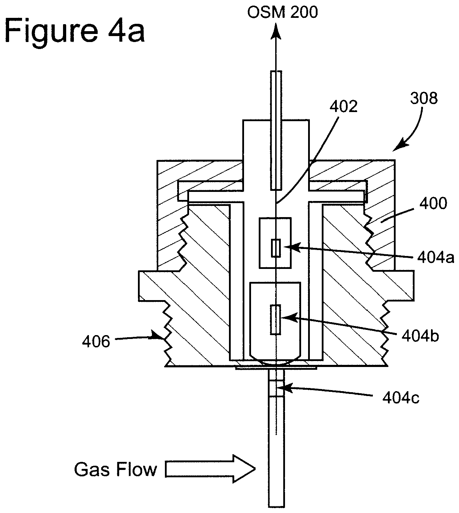

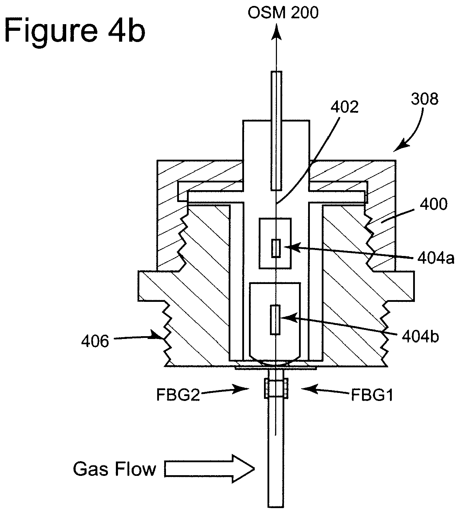

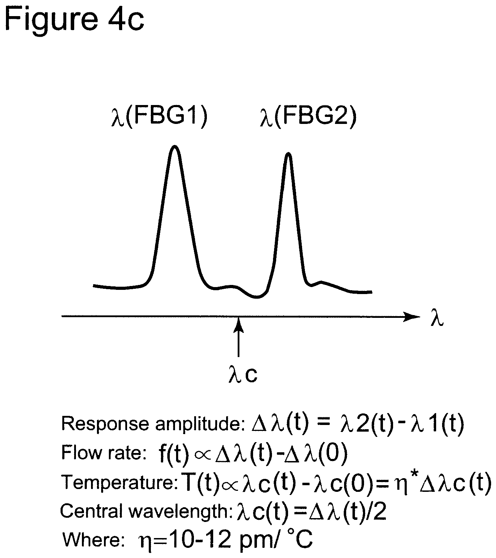

FIG. 4(a) illustrates an exemplary embodiment of an FBG sensor module 308, although it will be appreciated that other configurations may be used. The sensor module 308 is bolted or otherwise attached to the compressor or pipe wall 400 and extends at least partially into the gas flow stream through the compressor 302. The sensor module 308 includes an optical fiber 402 extending along the length of the module, wherein light is transmitted along the optical fiber 402 to and from the junction box. The optical fiber 402 can be formed of silicon dioxide material that is substantially inert with respect to gases that contain hydrocarbons. The sensor module 308 can include a plurality of fiber Bragg grating sensors 404 formed on single optical fiber 402. In the illustrated embodiment, the sensor module 308 includes a first fiber Bragg grating sensor 404a, a second fiber Bragg grating sensor 404b, and a third and fourth fiber Bragg grating sensors 404c have formed a group of two FBG sensor pair. One of these sensors is used to pressure, or temperature. Two may be combined together to measure flow and temperature. For example, 404c may have two FBG sensor pair which is bonded no opposite side of the deflection beam as shown in FIG.4(b). The flow induced force will bend the beam with tensile strain on front side FBG2 sensor while compressed strain on rear side FBG1 sensor. As shown in Figure 4(c), the central wavelength $\lambda c(t)$ is proportional to temperature. The difference between two FBG sensors can be directly calibrated for gas flowrate. Although the illustrated sensor module 308 shows only four sensors 404, it should be understood by one of ordinary skill in the art that any number of sensors can be positioned along the length of the optical fiber 402.

Each sensor 404a, 404b, 404c includes a fiber Bragg grating formed onto the optical fiber 402, and each sensor 404a, 404b, 404c is also configured to reflect a distinct peak wavelength through the optical fiber 402 that is different from the peak wavelength of the other sensors. In the illustrated embodiment, the first sensor 404a is configured to measure the localized temperature, the second sensor 404b is configured to measure the localized pressure, and the third and fourth sensor pair 404c is configured to measure the localized flow rate. The optical fiber 402 and the fiber Bragg grating sensors 404 are disposed within a housing 406 that is secured to the wall 400. The sensor module 308 is operatively connected to a junction box (not shown) that is configured to provide light through the optical fiber 402 to each of the fiber Bragg grating sensors 404, and the junction box is also configured to receive the light reflected from the fiber Bragg grating sensors 404. The particular operating parameter being measured causes a change in the peak in the wavelength of light reflected back to the junction box, or wavelength shift, produced by the fiber Bragg sensor. The sensor module 308 illustrated in FIG. 4(a) or 4(b) may also include an additional sensor for measuring the amount of localized vibration. In the case, signals from four sensors in the sensor module 308 may also contain high-frequency component that is related to compressor, rotor, or blade dynamic response and surge condition.

Estimation of Polytropic Efficiency (Step 102)

Regardless of the manner in which the data is collected, e.g., manually and/or automatically (e.g., using the system of FIGs. 3-4), the next step in the method of FIG. 1 to determine a level of fouling of a compressor is to determine or estimate the polytropic efficiency of one or more (or all) of the stages 304. For the sake of clarity in this example, the calculation of polytropic efficiency will be illustrated by simplifying the complex system through the hypothesis that a perfect gas condition exists. Those skilled in the art will appreciate that a more complex mathematical model can instead be used for real gas conditions. With this in mind, this step can , be performed by calculating the polytropic efficiency η for a stage 304 in the compressor 302 as:

$$\eta=(k-1)/k * \ln (P2/P1)/ \ln (T2/T1), \qquad (1)$$

where

k=Cp/Cv, i.e., the ratio of the constant-pressure specific heat over the constant-volume specific heat;

T1 and T2 are suction and discharge temperatures, respectively, in the stage 304;

P1 and P2 are suction and discharge pressures, respectively, in the stage 304. As mentioned above, equation (1) is valid for ideal gas conditions. For an implementation wherein non-ideal gas conditions exist, polytropic efficiency can be calculated by one skilled in the art using equations which adapt equation (1) to such non-ideal conditions, e.g., as described in the article "The Polytropic Analysis of Centrifugal Compressors", by John M. Schulz, Journal of Power Engineering, January 1962, pp. 69-82, the disclosure of which is incorporated here by reference. The embodiments described herein are intended to include all such variants on equations for calculating polytropic efficiency.

In some compressor implementations, it may be the case that all of these values are readily available in order for a processor in the OSM 200 to perform this calculation. For example, for implementations wherein the compressor includes pressure sensors, thermocouples and an attached gas chromatograph (or the like), it may be possible to not only know the values for the temperature and pressure, but to also be able to directly measure the gas composition to provide an accurate value for k in equation (1). However in other implementations it may instead be the case that, e.g., data associated with the gas composition is not available to use in estimating the polytropic efficiency, i.e., in plants which do not use a gas chromatograph to monitor compressor gas composition.

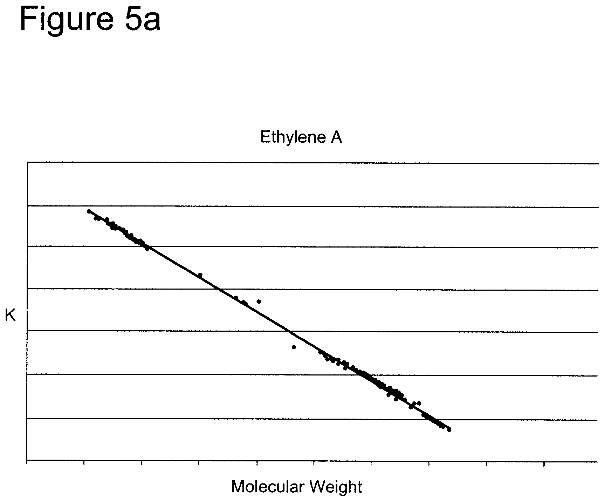

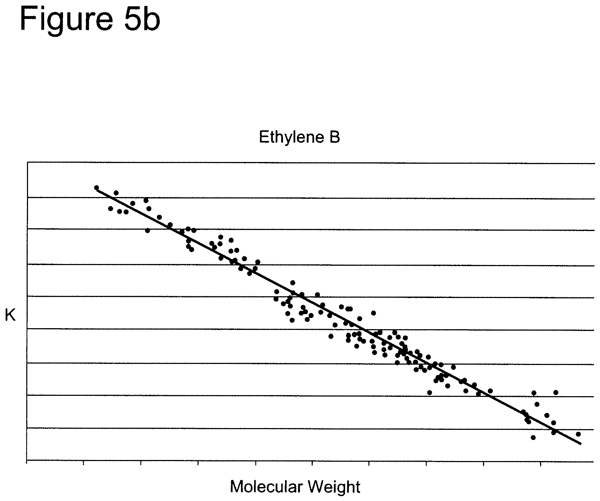

One approach to solving this problem is to instead use a standard design value for k, i.e. a constant gas composition, to calculate polytropic efficiency However, using a standard k value leads to large errors in the calculation of the actual polytropic efficiency. Accordingly, exemplary embodiments described herein also recognize that, at least on a per compressor implementation basis, there is a strong correlation between the molecular weight of the process gas and k. Examples of this correlation, based on empirical data, are illustrated in Figures 5(a) and 5(b). Thus, by measuring and collecting data on the process gas density, e.g., using sensors such as those described above with respect to FIGS. 3-4, a significant improvement in the accuracy of the estimated polytropic efficiency can be obtained. Indeed, if a standard molecular weight is used, the average error in the estimation of k without considering the molecular weight of the process gas is at least four times larger than if k is estimated starting from the molecular weight. Considering that a 1 % error in the estimation of k generates a 3 % error in the calculation of the polytropic efficiency, it can be seen that methods according to this embodiment can lead to a significant reduction of the errors.

Normalization of Estimated Polytropic Efficiency (Step 104)

While it is true that a primary effect of machine fouling is a decrease in the polytropic efficiency, the actual value alone of the polytropic efficiency does not provide enough information about the real conditions of the compressor in order to directly determine a degree of fouling of a compressor or a compressor stage. Instead, variations in compressor polytropic efficiency can occur not only because of increased fouling, but also because of variation input conditions such as pressure, temperature, flow rate, and gas compositions, as well as operating conditions such as machine speed, etc. Gas composition is increasingly becoming one of the most critical components in assessing the fouling severity. For example, increased flexibility in feedstock and cracking severity, the possibility of using different streams from an upstream integrated refinery, and recycling of streams from downstream plants are greatly increasing the variation of cracked gas compositions for the same plant, exacerbate the complexity of the fouling phenomena, as well as its interpretation.

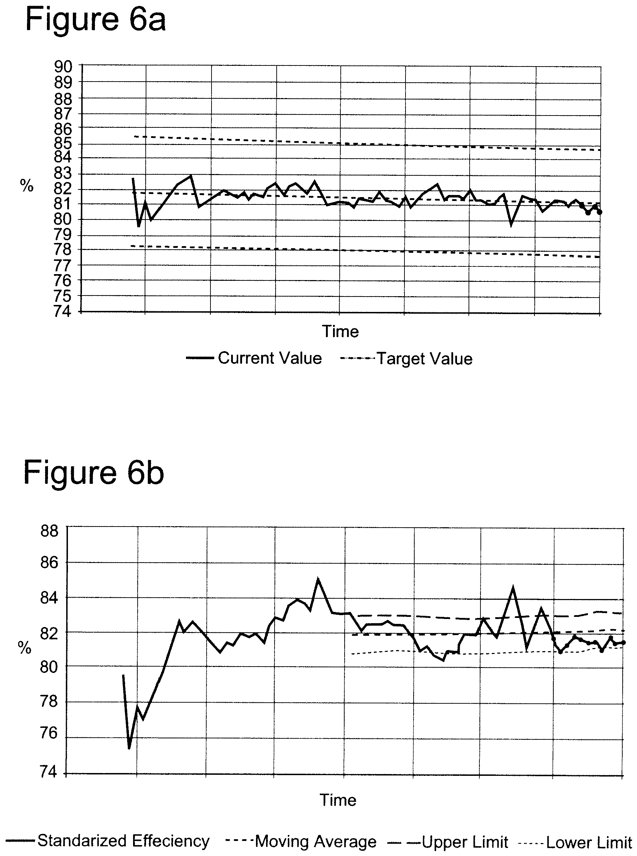

Thus, it is useful to normalize or standardize the estimated polytropic efficiency calculated in step 102 to remove the effects of other variable parameters from the estimated polytropic efficiency so that the degree of fouling can be more directly perceived. There are various choices for normalizing the estimated polytropic efficiency. One choice is to compare the estimated polytropic efficiency calculated using the gathered data with a statistical model of what the compressor's polytropic efficiency should be given the measured parameters of the operating compressor. An illustration of this normalization process is provided in the graph of FIG. 6(a).

Another choice for normalization according to an embodiment is to compare the estimated polytropic efficiency calculated using the gathered data with what the design values for that particular compressor indicate the polytropic efficiency should be given the measured parameters of the operating compressor. An illustration of this normalization process, for the same measured parameter data as in FIG. 6(a), is provided in the graph of FIG. 6(b). Whereas the normalized estimated efficiency in FIG. 6(a) shows no clear evidence of fouling by way of efficiency degradation, it can be seen that the normalized efficiency function in FIG. 6(b) more clearly shows eleven points below the moving average toward the end of the evaluation period --- an indication of the occurrence of fouling. Thus, at least for some implementations, using design values rather than statistical modeling to perform the normalization of the estimated polytropic efficiency may lead to more rapid discovery of fouling problems within the machinery More specifically, the design value approach described above with respect to FIG. 6(b) can, for example, involve calculating the actual polytropic efficiency at measured values of the different variables (e.g., pressure, temperature, flow rate, gas composition, compression train revolution speed, actual compressor characteristic curve), evaluating the expected polytropic efficiency (using the same mathematical tools and models used during the design stage plus any correction to the model performed for the specific machine during the shop test of the machine) at the value of the different variables, and determining the degree of fouling in the compressor as the difference between the actual polytropic efficiency and the expected one.

Determining A Degree of Fouling Based on the Normalized Estimated Polytropic Efficiency (Step 106)

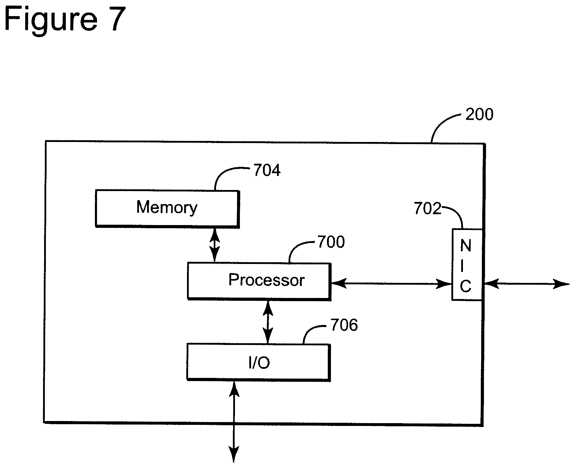

As illustrated above, the normalized estimated polytropic efficiency of a compressor can be used to determine a degree of fouling of the machine, e.g., by displaying a graph which shows the normalized function relative to limit values, moving averages or other statistically meaningful comparators. In this context, step 106 should be considered to broadly describe the usage of the normalized polytrophic efficiency values to discern fouling problems including, but without limitation, displaying values, issuing alerts, otherwise indicating a level of fouling, identifying locations (stages) within the compressor where fouling has been identified, and/or suggest anti-fouling measure(s) to be taken, etc. Although some aspects of the process may be performed manually, according to some embodiments some or all of the steps may be performed using a computer or processor 700 as part of the OSM 200 as shown in FIG.7. The OSM 200 can use the structures and elements illustrated in FIG.7, or other elements, to perform the method for determining a degree of fouling as described in one or more of the embodiments described above. The processor 700 can, for example, continually collect measured operating parameters of each compressor stage from the sensor modules 308 via network interface controller (NIC) 702 and store the collected measurements in memory 704 on a real-time basis. Data acquisition can be performed on a continuous basis, e.g., at the maximum sampling rate allowed by the data source, to ensure that a precise assessment of the machine condition can be made even during transient operation. Typical data frequencies are from one sample/second to one sample/minute. Data are stored in a local database. The OSM 200 can perform the calculation of the polytropic efficiency, its normalization according to the current process conditions of pressure, temperature, and flow rate (if available), as well as the evaluation of the expected efficiency, based on a real performance curve, as described above.

A graphical user interface can be used to display the input/output 706 in any desired format and to inform the users of the measured system operation conditions received from the sensing modules, compressor efficiency, etc., as well as to control and optimize operation of the compressor. The user may use this information in any desired manner to take anti-fouling measures. Alternatively, anti-fouling measures including (a) injection of water (to lower temperature and therefore curb polymerization leading to fouling), (b) injection of a wash oil liquid to solubilize the polymers, and/or (c) injection of proprietary anti-fouling formulations to stop polymerization may be suggested by the OSM 200 via the user interface or performed automatically at determined injection points within the system.

Systems and methods for processing data according to exemplary embodiments of the present invention can be performed by one or more processors executing sequences of instructions contained in a memory device. Such instructions may be read into the memory device from other computer-readable mediums such as secondary data storage device(s). Execution of the sequences of instructions contained in the memory device causes the processor to operate, for example, as described above. In alternative embodiments, hard-wire circuitry may be used in place of or in combination with software instructions to implement the present invention.

While preferred embodiments of the present invention have been described, it should be understood that the present invention is not so limited and modifications may be made without departing from the present invention. The scope of the present invention is defined by the appended claims, and all devices, process, and methods that come within the meaning of the claims, either literally or by equivalence, are intended to be embraced therein.

**Claims**

**1.** A method for determining a degree of fouling formation in a compressor, the method comprising:

collecting data associated with operation of the compressor (100);
estimating a polytropic efficiency of at least one stage of the compressor using the collected data (102);
normalizing the estimated polytropic efficiency (104); and
determining the degree of fouling formation in the compressor based on the normalized estimated polytropic efficiency (106).

2. The method of claim 1, wherein the step of collecting data further comprises:
obtaining data associated with pressure, temperature, and gas density in different stages from a compressor or compressor train.

3. The method of claim 1 or claim 2, wherein the step of estimating the polytropic efficiency $\eta$ further comprises, for an ideal gas condition,

$$\text{calculating } \eta=(k-1)/k * \ln (P2/P1)/ \ln (T2/T1),$$

where:

k is a ratio of a constant-pressure specific heat over a constant-volume specific heat;
T1 and T2 are suction and discharge temperatures, respectively; and
P1 and P2 are suction and discharge pressures, respectively, or a variant of this equation for non-ideal gas conditions.

4. The method of any preceding claim, wherein a value for k is directly measured using a gas chromatograph from a specific stage in the compressor.

5. The method of any preceding claim, wherein a value for P1 and P2 are directly measured using pressure gauges from suction and discharge sections in the compressor.

6. The method of any preceding claim, wherein a value for T1 and T2 are directly measured using thermometers from suction and discharge sections in the compressor.

7. The method of any preceding claim, wherein a value for k is estimated based on a measured gas density which is obtained from the collected data.

8. The method of any preceding claim, further comprising:
providing an optical sensor (308) which measures gas density from at least one stage in the compressor.

9. A system for determining a degree of fouling formation in a compressor, the system comprising:

an interface (702) configured to collect data associated with operation of the compressor; and
a processor (700) configured to estimate a polytropic efficiency of at least one stage of the compressor using the collected data, to normalize the estimated polytropic efficiency, and to determine the degree of fouling formation in the compressor based on the normalized estimated polytropic efficiency.

10. A charge gas compressor monitoring system (300) for determining polytropic efficiency of a charge gas compressor train (302) having a plurality of compressor stages (304) fluidly connected in series and an inter-stage cooler (306) positioned between adjacent compressor stages (304), said charge gas compressor monitoring system comprising:

a plurality of optical sensing modules (308), wherein each of said sensing modules is positioned adjacent to an inlet or an outlet of each compressor stage, each sensing module comprising at least one fiber Bragg grating sensor (404) positioned within a housing (406) for measuring an operating parameter for a corresponding compressor stage (304), and each of said fiber Bragg grating sensors is functionalized to respond to temperature, pressure, gas density, flow rate, or dynamic event; and
a controller (702) operatively connected to said optical sensing modules (308), said controller including a processor (700) to determine an estimated polytropic efficiency corresponding to each compressor stage and to output an indication of a normalized polytropic efficiency and the degree of fouling formation based on the normalized polytropic efficiency corresponding to each compressor stage.

**Patentansprüche**

1. Verfahren zum Bestimmen eines Grades an Verschmutzungsbildung in einem Verdichter, wobei das Verfahren umfasst:

   Sammeln von Daten, die mit einem Betrieb des Verdichters (100) assoziiert sind;
   Schätzen eines polytropen Wirkungsgrades von mindestens einer Stufe des Verdichters unter Verwendung der gesammelten Daten (102);
   Normieren des geschätzten polytropen Wirkungsgrades (104); und
   Bestimmen des Grades an Verschmutzungsbildung in dem Verdichter basierend auf dem normierten geschätzten polytropen Wirkungsgrad (106).

2. Verfahren nach Anspruch 1, wobei der Schritt des Sammelns von Daten weiter umfasst:
   Erhalten von Daten, die mit einem Druck, einer Temperatur und einer Gasdichte in verschiedenen Stufen assoziiert sind, von einem Verdichter oder Verdichterstrang.

3. Verfahren nach Anspruch 1 oder Anspruch 2, wobei der Schritt des Schätzens des polytropen Wirkungsgrades η für einen optimalen Gaszustand weiter umfasst,

$$\text{Berechnen von } \eta = (k - 1) / k * \ln (P2 / P1) / \ln (T2 / T1),$$

   wobei:

   k ein Verhältnis einer spezifischen Wärme bei konstantem Druck zu einer spezifischen Wärme bei konstantem Volumen ist;
   T1 und T2 jeweils Ansaug- und Austrittstemperaturen sind; und
   P1 und P2 jeweils Ansaug- und Austrittsdruck sind, oder eine Variante dieser Gleichung für nicht optimale Gaszustände.

4. Verfahren nach einem der vorstehenden Ansprüche, wobei ein Wert für k unter Verwendung eines Gaschromatographen von einer spezifischen Stufe in dem Verdichter direkt gemessen wird.

5. Verfahren nach einem der vorstehenden Ansprüche, wobei ein Wert für P1 und P2 unter Verwendung von Druckmessgeräten von Ansaug- und Austrittsabschnitten in dem Verdichter direkt gemessen werden.

6. Verfahren nach einem der vorstehenden Ansprüche, wobei ein Wert für T1 und T2 unter Verwendung von Thermometern von Ansaug- und Austrittsabschnitten in dem Kompressor direkt gemessen werden.

7. Verfahren nach einem der vorstehenden Ansprüche, wobei ein Wert für k basierend auf einer gemessenen Gasdichte geschätzt wird, die aus den gesammelten Daten erhalten wird.

8. Verfahren nach einem der vorstehenden Ansprüche, weiter umfassend:
   Bereitstellen eines optischen Sensors (308), der eine Gasdichte von mindestens einer Stufe in dem Verdichter misst.

9. System zum Bestimmen eines Grades an Verschmutzungsbildung in einem Verdichter, wobei das System umfasst:

   eine Schnittstelle (702), die konfiguriert ist, um Daten zu sammeln, die mit einem Betrieb des Verdichters assoziiert sind; und
   einen Prozessor (700), der konfiguriert ist, um einen polytropen Wirkungsgrad von mindestens einer Stufe des Verdichters unter Verwendung der gesammelten Daten zu schätzen, um den geschätzten polytropen Wirkungsgrad zu normieren, und um den Grad an Verschmutzungsbildung in dem Verdichter basierend auf dem normierten geschätzten polytropen Wirkungsgrad zu bestimmen.

10. Ladegasverdichter-Überwachungssystem (300) zum Bestimmen eines polytropen Wirkungsgrades eines Ladegasverdichterstrangs (302), der eine Vielzahl von Verdichterstufen (304), die in Reihe fluidisch verbunden sind, und einen Zwischenstufenkühler (306), der zwischen benachbarten Verdichterstufen (304) positioniert ist, aufweist, wobei das Ladegasverdichter-Überwachungssystem umfasst:

eine Vielzahl von optischen Sensormodulen (308), wobei jedes der Sensormodule benachbart zu einem Einlass oder einem Auslass jeder Verdichterstufe positioniert ist, wobei jedes Sensormodul mindestens einen Faser-Bragg-Gitter-Sensor (404) umfasst, der innerhalb eines Gehäuses (406) zum Messen eines Betriebsparameters für eine entsprechende Verdichterstufe (304) positioniert ist, und jeder der Faser-Bragg-Gitter-Sensoren funktionalisiert ist, um auf eine Temperatur, einen Druck, eine Gasdichte, einen Durchfluss, oder ein dynamisches Ereignis zu reagieren; und

eine Steuerung (702), die betriebsbereit mit den optischen Sensormodulen (308) verbunden ist, wobei die Steuerung einen Prozessor (700) einschließt, um einen geschätzten polytropen Wirkungsgrad zu bestimmen, der jeder Verdichterstufe entspricht, und um einen Hinweis eines normierten polytropen Wirkungsgrades und des Grades an Verschmutzungsbildung basierend auf dem normierten polytropen Wirkungsgrad, der jeder Verdichterstufe entspricht, auszugeben.

## Revendications

1. Procédé de détermination d'un degré de formation de salissure dans un compresseur, le procédé comprenant :

la collecte de données associées à l'opération du compresseur (100) ;
l'estimation d'une efficience polytropique d'au moins un étage du compresseur en utilisant les données collectées (102) ;
la normalisation de l'efficience polytropique estimée (104) ; et
la détermination du degré de formation de salissure dans le compresseur sur la base de l'efficience polytropique estimée normalisée (106).

2. Procédé selon la revendication 1, dans lequel l'étape de collecte des données comprend en outre :
l'obtention de données associées à la pression, la température, et la densité de gaz dans différents étages d'un compresseur ou train de compresseur.

3. Procédé selon la revendication 1 ou revendication 2, dans lequel l'étape d'estimation de l'efficience polytropique ɳ comprend en outre, pour un état de gaz idéal,
le calcul

$$\eta = (k-1)/k * \ln (P2/P1) / \ln (T2/T1),$$

où :

k est un rapport d'une chaleur spécifique de pression constante sur une chaleur spécifique de volume constant ;
T1 et T2 sont des températures d'aspiration et de décharge respectivement ; et
P1 et P2 sont des pressions d'aspiration et de décharge respectivement ou une variante de cette équation pour des états de gaz non idéal.

4. Procédé selon une quelconque revendication précédente, dans lequel une valeur pour k est directement mesurée en utilisant un chromatographe de gaz d'un étage spécifique dans le compresseur.

5. Procédé selon une quelconque revendication précédente, dans lequel une valeur pour P1 et P2 est directement mesurée en utilisant des manomètres des sections d'aspiration et de décharge dans le compresseur.

6. Procédé selon une quelconque revendication précédente, dans lequel une valeur pour T1 et T2 est directement mesurée en utilisant des thermomètres des sections d'aspiration et de décharge dans le compresseur.

7. Procédé selon une quelconque revendication précédente, dans lequel une valeur pour k est estimée sur la base d'une densité de gaz mesurée qui est obtenue à partir des données collectées.

8. Procédé selon une quelconque revendication précédente, comprenant en outre :
la fourniture d'un capteur optique (308) qui mesure la densité de gaz à partir d'au moins un étage dans le compresseur.

9. Système de détermination d'un degré de formation de salissure dans un compresseur, le système comprenant :

une interface (702) configurée pour collecter des données associées au fonctionnement du compresseur ; et un processeur (700) configuré pour estimer une efficience polytropique d'au moins un étage du compresseur en utilisant les données collectées, pour normaliser l'efficience polytropique estimée, et pour déterminer le degré de formation de salissure dans le compresseur sur la base de l'efficience polytropique estimée normalisée.

10. Système de surveillance de compresseur de gaz de charge (300) pour la détermination de l'efficience polytropique d'un train de compresseur de gaz de charge (302) présentant une pluralité d'étages de compresseur (304) raccordées fluidiquement en série et un refroidisseur interétage (306) positionné entre des étages de compresseur adjacents (304), ledit système de surveillance de compresseur de gaz de charge comprenant :

une pluralité de modules de détection optiques (308), dans lequel chacun desdits modules de détection est positionné de manière adjacente à une entrée ou une sortie de chaque étage de compresseur, chaque module de détection comprenant au moins un capteur à fibre à réseau de Bragg (404) positionné dans un boîtier (406) pour mesurer un paramètre opérationnel pour un étage de compresseur correspondant (304), et chacun desdits capteurs à fibre à réseau de Bragg est fonctionnalisé pour répondre à la température, la pression, la densité de gaz, au débit ou à un événement dynamique ; et
un élément de commande (702) raccordé en fonctionnement auxdits modules de détection optiques (308), ledit élément de commande incluant un processeur (700) pour déterminer une efficience polytropique estimée correspondant à chaque étage de compresseur pour sortir une indication d'une efficience polytropique normalisée et le degré de formation de salissure sur la base de l'efficience polytropique normalisée correspondant à chaque étage de compresseur.

# Figure 1

```
                                                              ┌─100
┌──────────────────────────────────────────────────────────────┐
│                                                                │
│        Collecting data associated with operation of the compressor │
│                                                                │
└──────────────────────────────────────────────────────────────┘
                              │
                              │                               ┌─102
                              ▼
┌──────────────────────────────────────────────────────────────┐
│                                                                │
│      Estimating polytropic efficiency of at least one stage of the compressor │
│                                                                │
└──────────────────────────────────────────────────────────────┘
                              │
                              │                               ┌─104
                              ▼
┌──────────────────────────────────────────────────────────────┐
│                                                                │
│              Normalizing the estimated polytropic efficiency   │
│                                                                │
└──────────────────────────────────────────────────────────────┘
                              │
                              │                               ┌─106
                              ▼
┌──────────────────────────────────────────────────────────────┐
│ Determining a degree of fouling of the at least one stage of the compressor │
│         based on the normalized, estimated polytropic efficiency │
└──────────────────────────────────────────────────────────────┘
```

# Figure 2

Compressor — 202

Compressor Performance — 208

On site Monitoring — 200

Static data — 204

Dynamic Data — 206

Process Data — 203

EP 2 761 188 B1

Figure 3

# Figure 4a

OSM 200

402

308

400

404a

404b

406

404c

Gas Flow

Figure 4b

OSM 200

402

308

400

404a

404b

406

FBG2 ← → FBG1

Gas Flow ⇨

# Figure 4c

Response amplitude: $\Delta\lambda(t) = \lambda 2(t) - \lambda 1(t)$

Flow rate: $f(t) \propto \Delta\lambda(t) - \Delta\lambda(0)$

Temperature: $T(t) \propto \lambda c(t) - \lambda c(0) = \eta^* \Delta\lambda c(t)$

Central wavelength: $\lambda c(t) = \Delta\lambda(t)/2$

Where: $\eta = 10\text{-}12 \text{ pm/ }°C$

# Figure 5a

Ethylene A

# Figure 5b

Ethylene B

K

Molecular Weight

## Figure 6a

Time

——Current Value ----Target Value

## Figure 6b

Time

——Standarized Effeciency ----Moving Average — —Upper Limit ----Lower Limit

# Figure 7

**EP 2 761 188 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008027616 A1

- US 4825380 A

**Non-patent literature cited in the description**

- **JOHN M. SCHULZ.** The Polytropic Analysis of Centrifugal Compressors. *Journal of Power Engineering,* January 1962, 69-82